# EUROPEAN PATENT SPECIFICATION

(11) **EP 3 054 514 B1**
(45) Date of publication and mention of the grant of the patent: **09.01.2019**
(21) Application number: 15154119.0
(22) Date of filing: 06.02.2015
(51) Int. Cl.: H01M 8/026, H01M 8/0265

(54) **Separator plate unit for a fuel cell and fuel cell comprising the same with enhanced performance**
Separatorplatteneinheit für eine Brennstoffzelle und Brennstoffzelle damit mit verbesserter Leistung
Unité de plaque de séparation pour une pile à combustible et pile à combustible comprenant celle-ci avec des performances améliorées

(43) Date of publication of application: 10.08.2016
(73) Proprietor: Zentrum für Sonnenenergie- und Wasserstoff-Forschung Baden-Württemberg Gemeinnützige Stiftung, 70565 Stuttgart (DE)
(72) Inventor: Kermani, Mohammad Jafar, 89081 Ulm (DE); Scholta, Joachim, 89081 Ulm (DE)
(74) Representative: Ter Meer Steinmeister & Partner

(56) References cited:
- WO-A1-2013/105956
- JP-A- 2004 241 141
- US-A1- 2002 119 360
- US-A1- 2013 316 263

## Description

### Field of the Invention

The present invention relates to a separator plate unit for a fuel cell comprising a flow field with fluid guide channels, wherein flow obstacles are arranged within the fluid guide channels. The invention also relates to a fuel cell comprising such a separator plate unit with an enhanced performance.

### Background of the Invention

In fuel cells, high power density combined with low cost becomes crucial for a broad range of applications, specially for automotive applications. One of the useful strategies to fulfill this target is to maximize the power density of fuel cells specially, but without restriction, in Polymer Electrolyte Membrane Fuel Cells (PEMFC). One of the main strategies for achieving that target is to maximize the reactant concentration in all regions of the catalyst layer. This can be done by the selection of very fine structured media distributors. For technical reasons, this is often not possible, e.g. because of manufacturing limitations for metallic bipolar plates, or not cost effective, e.g. machining of flow field structures in the case of graphite composite plates. For more coarse flow fields that are usually selected for the reasons given above, usually the active areas over the ribs between the channels suffer from the low contents of reacting species. This is more severe in regions closer to the exits of flow fields where some islands that starve for reacting species exist. In the case of metallic bipolar plates in which the rib sizes are generally bigger, the areas of the starving islands are even bigger. The existence of these islands can degrade the cell performance, and cause ageing issues in long runs.

### Background of the Invention and Related Art

One means of solving the issue of low reactant concentration over the ribs of the flow field channel is the use of an interdigitated flow field, which is described by a configuration, where the flow along the channels reaches dead-ends, and mass flow is compulsorily forced to divert its ways toward the gas diffusion layer (GDL) into the neighboring channels, which are closed at the media inlet and open to the media outlet. This assignment helps to solve the issue of low reactant concentration but has two severe disadvantages. First, the use of an interdigitated flow field is accomplished at the expense of a very high pressure drop since no open channel from media inlet to outlet exists. Thereby, a high pumping power demand specially for air supply is needed. Second, there is the issue of low condensate removal towards the dead ends of both, the distributing and collecting channels.

Another alternative described in DE 10 2005 037 093 A1 is the partial opening of the channels towards the originally dead end side of the flow field channel to the inlet, respectively the outlet side. This is helping for an increased removal of condensate compared to the interdigitated flow field, but still allow either full condensate removal capability by designing big additional inlets and outlets resulting in low remaining convective flow over the ribs, or is still suffering from condensate removal issues, if only small openings at the former dead channel ends are foreseen.

US 2013/316263 A1 describes a separator plate having the following characteristics: channel width 0.49 mm, channel depth: 0.52 mm, rib width 0.5 mm. The obstacles are spaced 22.8 mm apart, which corresponds to 4.4 obstacles per 100 mm channel length. The obstacle cross section is 50% or 66% of the channel cross section. Further, the obstacles are arranged asymmetrically in adjacent channels.US 2002/0119360 A1 describes an oxidant flow field plate for a solid polymer electrolyte fuel cell, wherein a laminar flow of a dilute oxidant stream, for example air, may be disrupted by incorporating obstacles in the channels of an oxidant flow field. The laminar flow is changed to turbulent flow whereby enhancing the flow of oxygen to the membrane electrode assembly in the fuel cell. In one embodiment, there is described a separator plate with a channel length of 50 mm and 2 obstacles, which results in 4 obstacles per 100 mm channel length.

### Object of the Invention

It has been the object of the invention to provide a separator plate unit for a fuel cell and a fuel cell comprising such a separator plate unit having an enhanced performance as well as a condensate removal capability comparable to a conventional fuel cell with a serpentine flow field.

### Summary of the Invention

The above object is achieved according to the invention by a separator plate unit according to claim 1 as well as by a fuel cell according to claim 11.

Preferred and particularly useful embodiments of the invention are indicated in the subclaims.

According to the invention, a part of the channel flow for the reaction fluids is diverted toward the gas diffusion layer (GDL) by partially blocking the channel sections of a conventional flow field having, e.g. a serpentine structure, i.e. wherein the fluid guide channels are arranged with a meandering structure. By the use of a separator plate unit according to the invention, a condensate removal capability comparable to a serpentine flow field is achieved, requiring less pumping power than fully interdigitated flow fields.

### Detailed Description of the Invention

The subject-matter of the invention is therefore a separator plate unit (sometimes also referred to as bipolar plate unit) for a fuel cell, which comprises a flow field with fluid guide channels for the reaction fluids, which run parallel to each other and are bounded by ribs, wherein flow obstacles narrowing the flow cross section of the fluid guide channels are arranged within the fluid guide channels, with 2-3 flow obstacles per 100 mm channel length are provided, the arrangement of the flow obstacles being asymmetric with respect to fluid guide channels being adjacent to each other, and wherein the flow obstacles have a cross section of each 50-90 % of the cross section area of the fluid guide channels.

Further, the subject-matter of the invention also is a fuel cell having a separator plate unit as described above on the cathode side and/or the anode side.

The invention is not directed to the use of partial channel blockages, i.e. indents or flow obstacles, itself. Rather, the invention is directed to the use of special configurations of such flow obstacles or indents, such that it is possible to obtain a reactant concentration increase, and thereby a performance increase, such that it is possible to have the same reactant concentration level for a less fine flow field structure (e.g. 0.9 mm channel and rib width) compared to a very fine flow field structure (e.g. 0.4 mm channel and rib width) at the same overall pressure drop.

On the other hand, at a given flow field structure, a high reactant concentration increase can be obtained in accordance with the invention compared to a reference flow field showing the same overall pressure drop. In that case, the comparison is related to a reference flow field having the same channel and rib width, but with reduced channel height resulting in a comparable pressure drop.

According to the invention, it is preferred that the flow obstacles have a cross section area of 50-80% of the flow cross section of the fluid guide channels.

It is further preferred that the fluid guide channels have a channel width of 0.4-1.5 mm, preferably 0.5-1 mm, and a channel depth of 0.3-1.6 mm, preferably 0.4-1 mm, and wherein said ribs bounding the fluid guide channels have a rib width of 0.5-1.5 mm, preferably 0.6-1 mm.

It should be noted that the channels must not necessarily have a pure rectangular shape, but might be slightly rounded. This is in particular the case where the separator plates are made of metallic material with the channels being formed by press working.

The flow field included in the separator plate unit of the invention comprises fluid guide channels for the reaction fluids which run parallel to each other. This may cover flow fields where the channels only run parallel to each other without any deflections. In particular, the present invention is best suitable, but not limited to, for flow fields with high degree of par-allelization. This also includes interdigitated flow fields as well as serpentine flow fields where the channels are arranged with a meandering structure.

It is also preferred that the fluid guide channels have opposed side walls and a floor, and said flow obstacles protrude from said channel floor and extend continuously or discontinuously between said side walls.

It is further preferred that the flow obstacles each have the form of a thin plate, the main surfaces of which are oriented in an angle with respect to the transverse direction of said fluid guide channels, wherein the thin plate preferably has a thickness of 0.5-3 mm, more preferably of 0.8-1.5 mm.

According to a preferred embodiment, the main surfaces of said thin plate are oriented in an angle between +75° and -75°, preferably between +45° and -45°, with respect to the transverse direction of said fluid guide channels. It is particularly preferred, that the main surfaces of said thin plate are essentially oriented vertically with respect to the flow direction of said fluid guide channels.

According to a further preferred embodiment, the main surfaces of said thin plate are oriented in an angle of from 20° to 90°, preferably of from 45° to 90°, more preferably of approximately 90°, with respect to the channel floor.

It is also preferred that said fluid guide channels, apart from the regions of the flow obstacles, have a constant flow cross section.

The asymmetric arrangement of flow obstacles or indents between neighboring fluid guide channels effects an over rib convection of the reaction fluids between adjacent fluid guide channels, in particular between the indents, but also in the areas of the indents.

The overall pressure drop between two flow obstacles or indents may be in the range from 0.2 to 20 mbar, preferably between 0.5 and 5 mbar, in relation to the operation of a fully constructed fuel cell including a gas diffusion layer as well as minimum allowable gas flows.

The separator (bipolar) plate unit is preferably made of a metallic material, preferably selected from a group, consisting of stainless steel, nickel, aluminum, titanium and alloys, which contain at least one of said metals, or from graphite or graphite composite materials. Graphite or graphite composite materials may be preferred for manufacturing reasons.

The fuel cell according to the invention is preferably a polymer electrolyte membrane (PEM) fuel cell, a fuel cell with liquid fuel, preferably a direct-methanol-fuel cell (DMFC), or a HT-PEM, PAFC, MCFC, SOFC or a redox-flow-cell. The construction and the components of a fuel cell according to the invention correspond to the prior art, except the separator plate unit on the cathode side and/or the anode side.

### Preferred Embodiments of the Invention

The present invention is illustrated in more detail with respect to preferred embodiments with reference to the drawings and the following detailed simulation study.

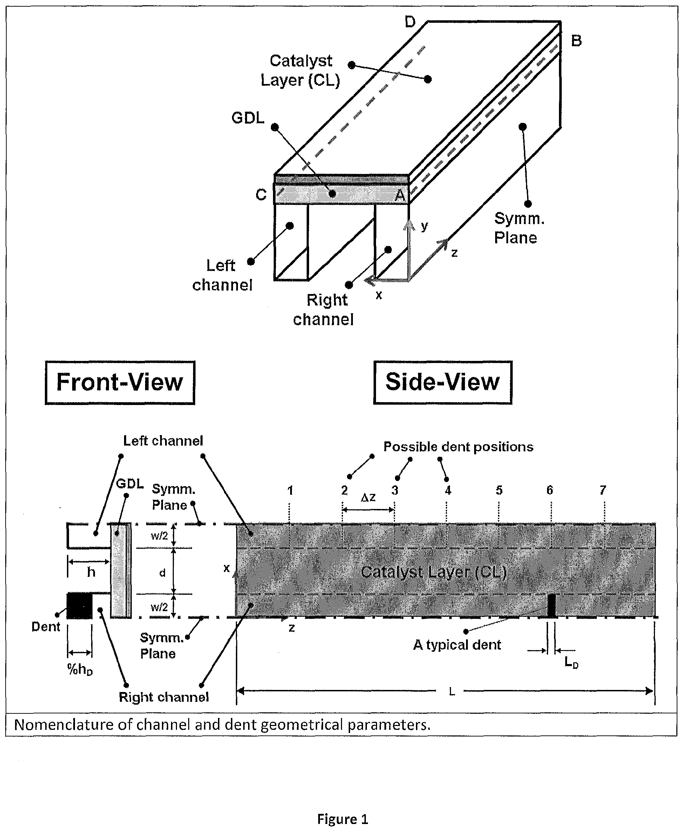

**Figure 1** illustrates the nomenclature of channel and dent (obstacle) geometrical parameters.

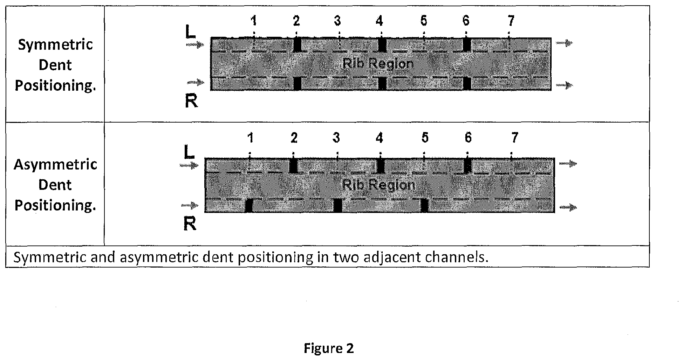

**Figure 2** illustrates symmetric and asymmetric dent (obstacle) positioning in two adjacent channels.
**Figure 3** shows the definition of dent (obstacle) configurations 1 to 5 used in the simulation study.

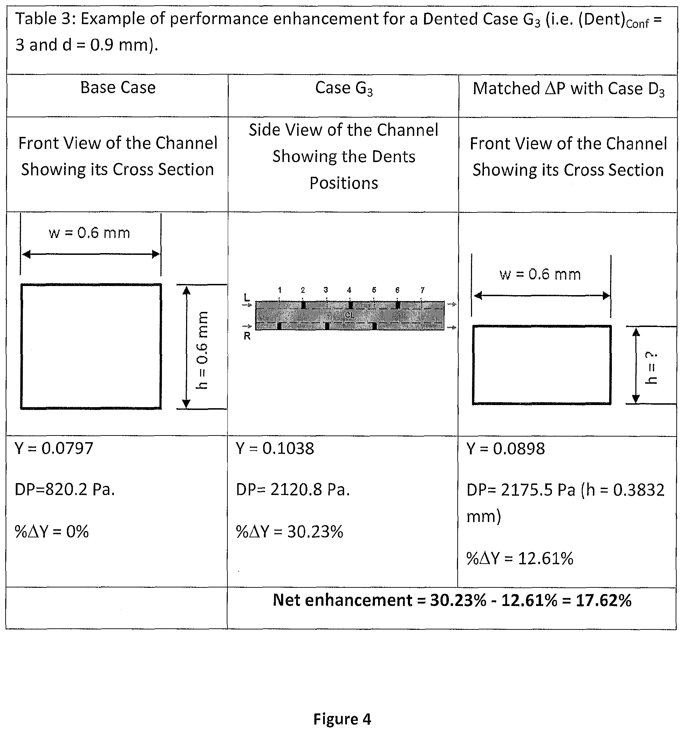

**Figure 4** illustrates an example of performance enhancement for a dented Case G₃ used in the simulation study.

### Detailed simulation study

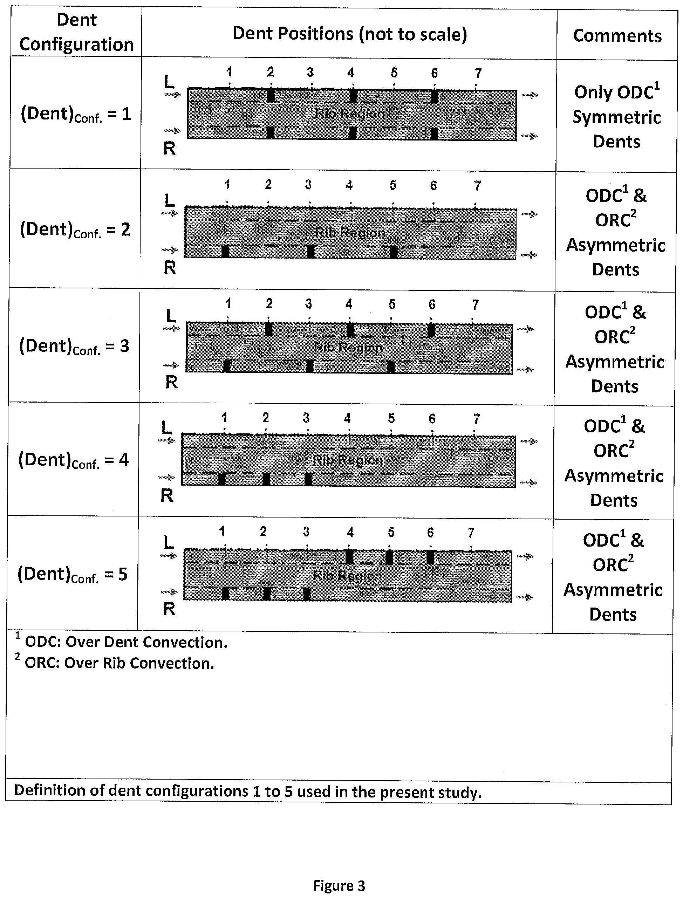

Out of a comprehensive parametric study performed for five different dent configurations shown in Fig. 3, two dent heights (%hD = 50 and 75%), three dent lengths (LD = 0.5, 1.0 and 2.0 mm) (meaning the width of a thin plate in an embodiment where the flow obstacle is a dent in the form of a thin plate), and two rib sizes (d = 0.6 and 0.9 mm), it can be derived, which configurations are useful to obtain the described effects.

Channel widths (w), heights (h) and lengths (L) are kept fixed at w = 0.6 mm, h = 0.6 mm and L = 100 mm. The computations of case d = 0.6 mm reveals that calculations for all %h_{D} and L_{D} values are not necessary (as discussed later). Hence for the case of d = 0.9 mm, computations are only performed at %h_{D} = 75% and L_{D} = 1.0 mm. Table 1 shows the definitions of the Cases A to G used, where the subscripts 1 to 5 correspond to the dent configuration as depicted in Fig. 3. A summary of the computed results is also shown in Table 2.

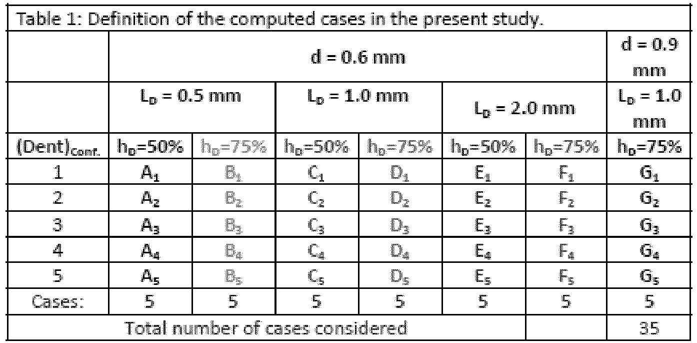

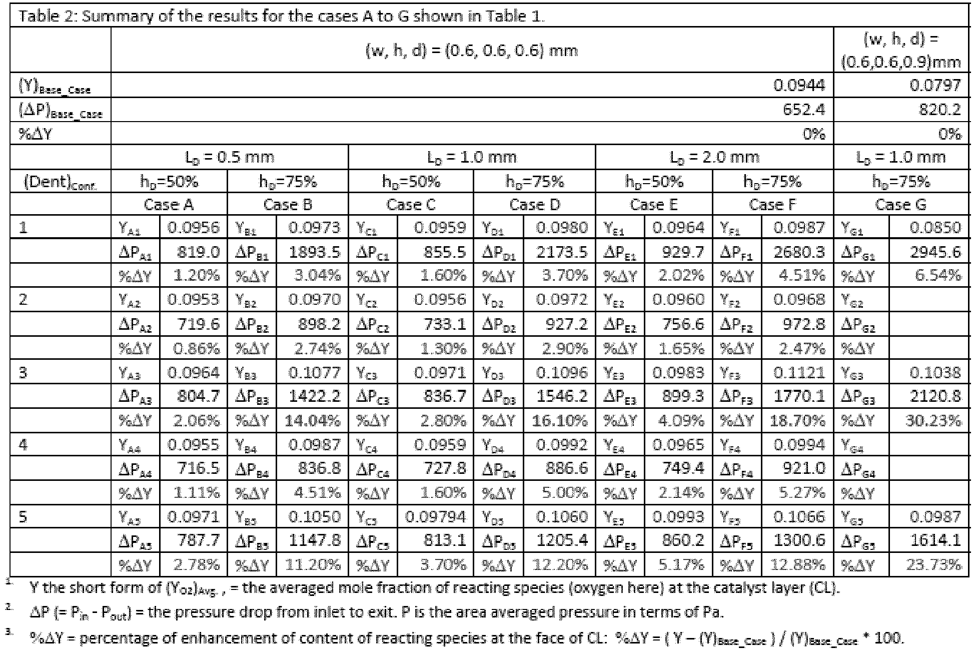

Table 2 shows a summary of the results for five dent configurations (Dent)Conf. = 1 to 5 as defined in Fig. 3. In this table Y is the content of reacting species at the face of CL, %ΔY is the percentage of enhancement in Y with respect to (w.r.t) the base case, and ΔP is the pressure drop from inlet to exit in Pa. As noted from Table 2, Cases A, C, and E that correspond to a low dent height value of %hD = 50%, then do not show significant improvement in %ΔY, and are not further considered. In fact they produce very weak over-rib and over-dent convection into the GDL.

The (Dent)_{Conf}. = 1 (see Fig. 3) possesses symmetric dent configuration (not according to the invention), and can only provide good over-dent-convection. Despite the high pressure drop values in the cases of %h_{D} = 75%, the improvements in content of reactants in CL face (%ΔY) are not significant.

Out of the cases considered, the asymmetric dent configurations (Dent)_{Conf}. = 3 and 5 show some periodic behavior in dent positioning, and illustrate significant improvements in the Y values at the face of CL. For example, in the Case D₃ (see Table 1 for the definition) that corresponds to (Dent)_{Conf}. = 3 with d=0.6 mm, %h_{D} = 75% and L_{D} = 1 mm, we have observed 16.10% increase in Y with respect to (w.r.t.) the base case (%ΔY = 16.10%).

The improvement for the larger rib values is much more. An example is provided for Case G3 with rib 0.9 mm (d = 0.9 mm). The improvement of Y in this case is %ΔY = 30.23% as can be seen in Table 2. On the other hand, the pressure drop increases from (ΔP)_{Base_Case} = 820.2 Pa to (ΔP)_{Case G3} = 2120.8 Pa. Although the %ΔY = 30.23% improvement is very significant, but as Y and ΔP compete on the performance enhancement in opposite directions, hence the real (net) enhancement is determined as follows. To do so a channel height is determined in a trial and error searching procedure in such a way that it produces same pressure drop as (ΔP)_{Case G3}. Table 3 shows the complete procedure for Case G₃.

The main reason for the improvements in the performance is due to repeated over-rib-convection within the GDL. This is caused by the pressure difference between the adjacent channels. The more this pressure difference is, the higher is the over-rib-convection within the GDL.

## Claims

1. A separator plate unit for a fuel cell, which comprises a flow field with fluid guide channels for the reaction fluids, which run parallel to each other and are bounded by ribs, wherein flow obstacles narrowing the flow cross section of the fluid guide channels are arranged within the fluid guide channels, with 2-3 flow obstacles per 100 mm channel length are provided, the arrangement of the flow obstacles being asymmetric with respect to fluid guide channels being adjacent to each other, and wherein the flow obstacles have a cross section area of each 50-90 % of the flow cross section of the fluid guide channels.

2. The separator plate unit as claimed in claim 1, wherein said flow obstacles have a cross section area of 50-80% of the flow cross section of the fluid guide channels.

3. The separator plate unit as claimed in claim 1 or 2, wherein said fluid guide channels have a channel width of 0.4-1.5 mm, preferably 0.5-1 mm, and a channel depth of 0.3-1.6 mm, preferably 0.4-1 mm, and wherein said ribs bounding the fluid guide channels have a rib width of 0.5-1.5 mm, preferably 0.6-1 mm.

4. The separator plate unit as claimed in at least one of the preceding claims, wherein said fluid guide channels have opposed side walls and a floor, and said flow obstacles protrude from said channel floor and extend continuously or discontinuously between said side walls.

5. The separator plate unit as claimed in at least one of the preceding claims, wherein said flow obstacles each have the form of a thin plate, the main surfaces of which are oriented in an angle with respect to the transverse direction of said fluid guide channels, wherein the thin plate preferably has a thickness of 0.5-3 mm, more preferably of 0.8-1.5 mm.

6. The separator plate unit as claimed in claim 5, wherein the main surfaces of said thin plate are oriented in an angle between +75° and -75°, preferably between +45° and -45°, with respect to the transverse direction of said fluid guide channels.

7. The separator plate unit as claimed in claim 5 or 6, wherein the main surfaces of said thin plate are essentially oriented vertically with respect to the flow direction of said fluid guide channels.

8. The separator plate unit as claimed in claim 5 or 6, wherein the main surfaces of said thin plate are oriented in an angle of from 20° to 90°, preferably of from 45° to 90°, more preferably of approximately 90°, with respect to the channel floor.

9. The separator plate unit as claimed in at least one of the preceding claims, wherein said fluid guide channels, apart from the regions of said flow obstacles, have a constant flow cross section.

10. The separator plate unit as claimed in at least one of the preceding claims, which is made of a metallic material, preferably selected from a group, consisting of stainless steel, nickel, aluminum, titanium and alloys, which contain at least one of said metals, or of graphite or graphite composite materials.

11. A fuel cell having a separator plate unit as claimed in at least one of the preceding claims on the cathode side and/or the anode side.

12. The fuel cell as claimed in claim 11, which is a polymer-electrolyte-membrane (PEM) fuel cell, a fuel cell with liquid fuel, preferably a direct-methanol-fuel cell (DMFC), or a HT-PEM, PAFC, MCFC, SOFC or a redox-flow-cell.

## Patentansprüche

1. Separatorplatteneinheit für eine Brennstoffzelle, die ein Strömungsfeld mit parallel verlaufenden, durch Stege begrenzte Fluidführungskanälen für die Reaktionsfluide aufweist, wobei innerhalb der Fluidführungskanäle den Strömungsquerschnitt der Fluidführungskanäle verengende Strömungswiderstände angeordnet sind, wobei 2-3 Strömungswiderstände pro 100 mm Kanallänge vorgesehen sind, die Anordnung der Strömungswiderstände, bezogen auf zueinander benachbarte Fluidführungskanäle, asymmetrisch ist, und die Strömungswiderstände eine Querschnittsfläche von jeweils 50-90% des Strömungsquerschnitts der Fluidführungskanäle aufweisen.

2. Separatorplatteneinheit nach Anspruch 1, wobei die Strömungswiderstände eine Querschnittsfläche von 50-80% des Strömungsquerschnitts der Fluidführungskanäle aufweisen.

3. Separatorplatteneinheit nach Anspruch 1 oder 2, wobei die Fluidführungskanäle eine Kanalbreite von 0,4-1,5 mm, vorzugsweise 0,5-1 mm, und eine Kanaltiefe von 0,3-1,6 mm, vorzugsweise 0,4-1 mm aufweisen, und die die Fluidführungskanäle begrenzenden Stege eine Stegbreite von 0,5-1,5 mm, vorzugsweise 0,6-1 mm besitzen.

4. Separatorplatteneinheit nach mindestens einem der vorangehenden Ansprüche, wobei die Fluidführungskanäle gegenüberliegende Seitenwände und einen Boden aufweisen und die Strömungswiderstände sich vom Kanalboden aus erheben und sich kontinuierlich oder diskontinuierlich zwischen den Seitenwänden erstrecken.

5. Separatorplatteneinheit nach mindestens einem der vorangehenden Ansprüche, wobei die Strömungswiderstände jeweils die Form einer dünnen Platte aufweisen, deren Hauptflächen bezüglich der Querrichtung der Fluidführungskanäle einen Winkel aufweisen, wobei die dünne Platte vorzugsweise eine Dicke von 0,5-3 mm, weiter vorzugsweise von 0,8-1,5 mm, aufweist.

6. Separatorplatteneinheit nach Anspruch 5, wobei die Hauptflächen der dünnen Platte bezüglich der Querrichtung der Fluidführungskanäle einen Winkel zwischen +75° und -75°, vorzugsweise zwischen +45° und -45°, aufweisen.

7. Separatorplatteneinheit nach Anspruch 5 oder 6, wobei die Hauptflächen der dünnen Platte im Wesentlichen senkrecht zur Strömungsrichtung der Fluidführungskanäle ausgerichtet sind.

8. Separatorplatteneinheit nach Anspruch 5 oder 6, wobei die Hauptflächen der dünnen Platte in einem Winkel von 20° bis 90°, vorzugsweise von 45° bis 90°, weiter vorzugsweise von etwa 90°, zum Kanalboden ausgerichtet sind.

9. Separatorplatteneinheit nach mindestens einem der vorangehenden Ansprüche, wobei die Fluidführungskanäle, abgesehen von den Bereichen der Strömungswiderstände, einen konstanten Strömungsquerschnitt aufweisen.

10. Separatorplatteneinheit nach mindestens einem der vorangehenden Ansprüche, wobei diese aus einem metallischen Material hergestellt ist, vorzugsweise gewählt aus einer Gruppe, bestehend aus nichtrostendem Stahl, Nickel, Aluminium, Titan und Legierungen, welche mindestens eines dieser Metalle enthalten, oder aus Graphit oder Graphit-Verbundmaterialien.

11. Brennstoffzelle mit einer Separatorplatteneinheit gemäß mindestens einem der vorangehenden Ansprüche auf der Kathodenseite und/oder Anodenseite.

12. Brennstoffzelle nach Anspruch 11, bei der es sich um eine Polymer-Elektrolyt-Membran (PEM)-Brennstoffzelle, eine Brennstoffzelle mit flüssigem Brennstoff, vorzugsweise eine Direkte-Methanol-Brennstoffzelle (DMFC) oder eine HT-PEM, PAFC, MCFC, SOFC oder eine Redox-Flow-Zelle handelt.

## Revendications

1. Une unité de plaque séparatrice pour pile à combustible, comprenant un champ d'écoulement avec des canaux de guidage de fluide pour les fluides de réaction, parallèles les uns aux autres et délimités par des nervures, dans lesquels sont disposés des obstacles à l'écoulement réduisant la section transversale d'écoulement des canaux de guidage de fluide dans les canaux de guidage de fluide, avec 2 à 3 obstacles étant disposés par longueur de canal de 100 mm, la disposition des obstacles à l'écoulement étant asymétrique par rapport à des canaux de guidage de fluide étant adjacents l'un par rapport à l'autre, et dans laquelle les obstacles à l'écoulement ont une section transversale de chacun 50 à 90% de la section transversale d'écoulement des canaux de guidage de fluide.

2. L'unité de plaque séparatrice tel que revendiquée dans la revendication 1, dans laquelle lesdits obstacles à l'écoulement ont une section transversale de 50 à 80% de la section d'écoulement des canaux de guidage de fluide.

3. L'unité de plaque séparatrice tel que revendiquée dans la revendication 1 ou 2, dans laquelle lesdits canaux de guidage de fluide ont une largeur de canal de 0,4 à 1,5 mm, de préférence de 0,5 à 1 mm, et une profondeur de canal de 0,3 à 1,6 mm, de préférence de 0,4 à 1 mm, et dans lequel lesdites nervures délimitant les canaux de guidage de fluide ont une largeur de 0,5 à 1,5 mm, de préférence de 0,6 à 1 mm.

4. L'unité de plaque séparatrice tel que revendiquée dans au moins l'une des revendications précédentes, dans laquelle lesdits canaux de guidage de fluide ont des parois latérales opposées et un fond, et lesdits obstacles à l'écoulement font saillie dudit fond de canal et s'étendent de manière continue ou discontinue entre lesdites parois latérales.

5. L'unité de plaque séparatrice tel que revendiquée dans au moins l'une des revendications précédentes, dans laquelle lesdits obstacles à l'écoulement ont chacun la forme d'une plaque mince dont les surfaces principales sont orientées selon un angle par rapport à la direction transversale desdits canaux de guidage de fluide, dans lequel la plaque mince a de préférence une épaisseur de 0,5 à 3 mm, de manière davantage préférée de 0,8 à 1,5 mm.

6. L'unité de plaque séparatrice tel que revendiquée dans la revendication 5, dans laquelle les surfaces principales de ladite plaque mince sont orientées selon un angle compris entre + 75° et - 75°, de préférence entre + 45° et - 45°, par rapport à la direction transversale des canaux de guidage de fluide.

7. L'unité de plaque séparatrice tel que revendiquée dans la revendication 5 ou 6, dans laquelle les surfaces principales de ladite plaque mince sont essentiellement orientées verticalement par rapport à la direction d'écoulement desdits canaux de guidage de fluide.

8. L'unité de plaque séparatrice tel que revendiquée dans la revendication 5 ou 6, dans laquelle les surfaces principales de ladite plaque mince sont orientées selon un angle compris entre 20° et 90°, de préférence entre 45° et 90°, plus préférablement d'environ 90°, par rapport au fond de canal.

9. L'unité de plaque séparatrice tel que revendiquée dans au moins l'une des revendications précédentes, dans laquelle les canaux de guidage de fluide, à l'exception des régions desdits obstacles d'écoulement, ont une section transversale d'écoulement constante.

10. L'unité de plaque séparatrice tel que revendiquée dans au moins l'une des revendications précédentes, qui est fabriquée d'un matériau métallique, de préférence choisi parmi un groupe constitué d'acier inoxydable, de nickel, d'aluminium, de titane et d'alliages, qui contient au moins l'un desdits métaux, ou de graphite ou en matériaux composites à base de graphite.

11. Une pile à combustible ayant une unité de plaque de séparation tel que revendiquée dans au moins l'une des revendications précédentes du côté de la cathode et / ou du côté de l'anode.

12. La pile à combustible selon la revendication 11, qui est une pile à combustible à membrane polymère-électrolyte (PEM), une pile à combustible à combustible liquide, de préférence une pile à combustible à méthanol direct (DMFC), ou une pile HT-PEM, PAFC, MCFC, SOFC ou une cellule à flux redox.
